# EUROPÄISCHE PATENTSCHRIFT

(11) **EP 3 853 495 B1**
(45) Veröffentlichungstag und Bekanntmachung des Hinweises auf die Patenterteilung: **22.10.2025**
(21) Anmeldenummer: 19733694.4
(22) Anmeldetag: 18.06.2019
(51) Int. Cl.: F16D 3/68, F16F 15/124, F16F 1/38, B62D 7/22

(54) **ELASTISCHES LAGER**
ELASTIC BEARING
PALIER ELASTIQUE

(30) Priorität: 19.09.2018 DE 102018123055
(43) Veröffentlichungstag der Anmeldung: 28.07.2021
(73) Patentinhaber: Vibracoustic SE, 69469 Weinheim (DE)
(72) Erfinder: WERNER, Philipp, 21339 Lüneburg (DE); KARDOES, Hilrich, 21423 Winsen (DE)
(74) Vertreter: Patentanwälte Olbricht Buchhold Keulertz
(86) Internationale Anmeldenummer: PCT/EP2019/066093
(87) Internationale Veröffentlichungsnummer: WO 2020/057786

(56) Entgegenhaltungen:
- EP-A1- 2 083 191
- EP-B1- 2 083 191
- DE-A1- 102010 039 253
- DE-A1- 102011 008 396
- FR-A1- 2 701 518
- US-A- 5 591 083
- US-A1- 2015 246 689

## Beschreibung

Die vorliegende Erfindung betrifft ein elastisches Lager, insbesondere ein Lenkspindellager, zum drehelastischen Verbinden zweier Wellenabschnitte, insbesondere zum drehelastischen Verbinden eines eine Verzahnungskontur aufweisende Wellenabschnitts und eines eine Aufnahmeöffnung aufweisenden Wellenabschnitts.

Ein elastisches Lager der eingangs genannten Art, das auch als Lenkspindellager bezeichnet werden kann, wird zur Lagerung und Verbindung zweier Wellenabschnitte einer Lenksäule eingesetzt, um die von dem Fahrwerk eingeleiteten Schwingungen zu dämpfen und so vom Lenkrad zu entkoppeln.

Aus DE 10 2017 103 779 A1 ist ein zweiteiliges Lenkspindellager bekannt, das ein Innenteil, das mit einem Ende eines Wellenabschnitts einer Lenksäule verbindbar ist, eine das Innenteil umgebende Außenhülse, die mit einem Ende eines anderen Wellenabschnitts der Lenksäule verbindbar ist, und einen Elastomerkörper aufweist, der das Innenteil und die Außenhülse miteinander verbindet. Die Außenhülse ist zweiteilig ausgebildet und wird bei der Montage des Lagers um das Innenteil herumgelegt und mit dieser verbunden.

Aus der DE 20 2012 011 579 U1 ist ein einteiliges Lenkspindellager bekannt, das eine Innen- und eine Außenbuchse aufweist, welche durch eine Dämpfungsschicht drehmomentübertragend miteinander gekoppelt sind. Die Dämpfungsschicht ist dabei nicht kontinuierlich ausgebildet, sondern weist zylindrische und segmentartige Ausnehmungen auf. Sowohl die Innen- als auch die Außenbuchse weisen jeweils innen- und außenliegende Kreisringabschnitte auf, welche durch Verbindungsabschnitte verbunden sind. Hierdurch kann ein sternförmiger Wellenabschnitt in der Innenbuchse formschlüssig aufgenommen werden. Ferner kann die Außenbuchse in eine innen konturierte Aufnahmeöffnung formschlüssig eingesetzt werden. Aus DE 10 2011 008 396 A1 ist eine Kupplung zum dämpfenden Verbinden zweier Wellenabschnitte bekannt, bei der es sich vorzugsweise um zwei Wellenabschnitte einer Lenkwelle für ein Fahrzeuglenksystem handelt, wobei die Kupplung eine Buchsenanordnung mit einer bezüglich einer zentralen Längsachse radial inneren Buchse und einer radial äußeren Buchse aufweist, wobei die radial innere Buchse mit einem ersten Wellenabschnitt und die radial äußere Buchse mit einem zweiten Wellenabschnitt drehmomentübertragend koppelbar ist, wobei zwischen der radial inneren Buchse und der radial äußere Buchse eine Dämpfungsschicht vorgesehen ist.

Der vorliegenden Erfindung liegt die Aufgabe zugrunde, ein elastisches Lager zu schaffen, das einfach montierbar und kostengünstig ist und gleichzeitig eine verbesserte Lebensdauer, wie auch Torsionssteifigkeit und Designfreiheit aufweist. Diese Aufgabe wird durch ein elastisches Lager mit den Merkmalen des Anspruchs 1 gelöst.

Vorteilhafte Ausgestaltungen des elastischen Lagers sind Gegenstand der abhängigen Ansprüche.

Ein elastisches Lager, insbesondere ein Lenkspindellager, zum drehelastischen Verbinden zweier Wellenabschnitte, insbesondere zum drehelastischen Verbinden eines eine Verzahnungskontur aufweisenden Wellenabschnitts und eines eine Aufnahmeöffnung aufweisenden Wellenabschnitts, weist einen Elastomerkörper, der mit einem Ende eines der Wellenabschnitte formschlüssig und kraftschlüssig verbindbar ist, und eine den Elastomerkörper umgebende Außenhülse auf, die mit einem Ende des anderen Wellenabschnitts verbindbar ist.

Das elastische Lager weist lediglich eine Außenhülse und einen mit der Außenhülse verbundenen Elastomerkörper auf. Die Verbindung des elastischen Lagers mit einem Wellenabschnitt einer Lenksäule erfolgt somit unmittelbar über den Elastomerkörper, indem dieser form- und kraftschlüssig mit einem Ende des Wellenabschnitts verbunden wird. Dadurch ist das elastische Lager einfach zu montieren. Zudem entfällt ein Innenteil oder eine Innenhülse, so dass das Lager kostengünstig ist. Darüber hinaus ist bei gegebenen inneren und äußeren Anschlussgeometrien mehr Bauraum für das Elastomer vorhanden. Dies führt im Vergleich zu dem aus dem Stand der Technik bekannten elastischen Lager zu geringeren Dehnungen im Elastomerkörper bei gegebenen Torsionsauslenkungen und damit zu einer höheren Lebensdauer. Durch die direkt im Spritzgusswerkzeug anliegende innere Mantelfläche des Elastomerkörpers weist das Lager eine große Designfreiheit auf, so dass seine Eigenschaften in weiten Bereichen eingestellt werden können. Ferner, da die Innenkontur des Elastomerkörpers frei zugänglich ist, sind zur Ausbildung von Nieren beziehungsweise Freiräumen keine filigranen, zum Beispiel zylinderförmigen oder segmentförmigen Stifte oder Schwerter im Werkzeug notwendig. Vielmehr besteht die Innenkontur des Werkzeugs aus einer verhältnismäßig kompakten Struktur und ist damit robust und im Prozess beziehungsweise bei Werkzeugreinigung unempfindlich gegenüber Beschädigung und Verbiegungen.

In einer vorteilhaften Ausgestaltung ist die Außenhülse in eine Aufnahmeöffnung eines der Wellenabschnitte einsetzbar, wobei der Elastomerkörper eine Innenkontur aufweist, die derart ausgebildet ist, dass beim Einsetzen der Außenhülse in eine Aufnahmeöffnung oder einen Außentopf eines Wellenabschnittes das gesamte Lager komprimiert wird und infolge dessen der Elastomerkörper, insbesondere dessen Innenkontur, das Ende des Wellenabschnitts formschlüssig und kraftschlüssig umgreift. Dadurch wird der Elastomerkörper elastisch auf ein Ende eines Wellenabschnitts aufkalibriert. Das Aufkalibrieren erfolgt somit dadurch, dass die Außenhülse beim Einsetzen in die Aufnahmeöffnung den Elastomerkörper radial einwärts komprimiert, so dass dieser das Ende des Wellenabschnitts formschlüssig und kraftschlüssig umgreift. Durch die Kompression des Elastomerkörpers kann ein Formschluss erzeugt werden und gleichzeitig kann die Anpresskraft für einen optimalen Reibschluss gezielt eingestellt werden. Unter Aufkalibieren wird somit im Sinne der Erfindung eine Umfangsreduktion einer Innenkontur des Elastomerkörpers verstanden, die aus einer Kompression des Elastomerkörpers infolge einer Reduktion eines Außenumfangs der Außenhülse durch das Einpressen in die Aufnahmeöffnung resultiert.

In einer vorteilhaften Ausgestaltung ist der Elastomerkörper, insbesondere eine Innenkontur des Elastomerkörpers derart ausgebildet, dass dieser ohne hohe Vorspannung auf ein Ende eines Wellenabschnitts einer Lenkspindel aufsetzbar, insbesondere aufschiebbar ist. Vorteilhaft weist der Elastomerkörper eine Aufnahmeöffnung auf, in die ein Ende eines Wellenabschnittes einsetzbar, insbesondere einpressbar ist. Weiterhin vorteilhaft ist die Aufnahmeöffnung derart ausgebildet, dass ein Ende eines Wellenabschnittes ohne große Vorspannung einpressbar ist. Dadurch wird der Elastomerkörper keinen hohen Vorspannungen und einem daraus resultierenden Schub bei der Montage ausgesetzt, die das Lager elastisch zurückfedern lassen könnten. Somit ist das Lager prozesssicher auf dem Ende eines Wellenabschnitts positionierbar.

In einer vorteilhaften Ausgestaltung wird das elastische Lager montiert, indem zunächst die Lenkspindel in ein Lenkspindellager mit großem Radialmaß vor Ort beim Kunden eingeschoben wird. Anschließend werden das elastische Lager und die Lenkspindel in einer Aufnahmeöffnung oder einem metallischen Außentopf eines Wellenabschnitts montiert. Ein Innendurchmesser der Aufnahmeöffnung oder ein Innendurchmesser des Außentopfs ist vorteilhaft so klein gewählt, dass das elastische Lager eine Umfangsreduktion erfährt, um auf das Ende des Wellenabschnitts aufkalibriert zu werden und somit einen ausreichenden Festsitz auf der Lenkspindel zu erfahren.

Vorteilhaft umgreift der Elastomerkörper ein eine Verzahnungskontur aufweisendes Ende eines der Wellenabschnitte. Insbesondere weist der Wellenabschnitt eine sternförmige oder wellenförmige Kontur auf
In einer vorteilhaften Ausgestaltung ist der Elastomerkörper an eine Innenmantelfläche der Außenhülse stoffschlüssig angebunden. Insbesondere ist der Elastomerkörper an einer Innenmantelfläche der Außenhülse angespritzt beziehungsweise anvulkanisiert.

In einer vorteilhaften Ausgestaltung ist die Außenhülse aus Metall oder Kunststoff, insbesondere aus faserverstärktem Kunststoff. In einer vorteilhaften Ausgestaltung ist die Außenhülse in eine Innenverzahnungskontur aufweisende Aufnahmeöffnung oder Aufnahmetopf einsetzbar. Die Außenhülse weist vorteilhaft eine sternförmige oder wellenförmige Kontur auf, die aus Wellentälern und Wellenbergen gebildet ist.

In einer vorteilhaften Ausgestaltung ist die Außenhülse in der Art elastisch verformbar, dass während des Verbindens des Wellenabschnittes mit dem Elastomerkörper die auftretenden Montagekräfte um mindestens den Faktor 2 geringer sind, als die resultierenden Demontagekräfte zwischen Wellenabschnitt und Elastomerkörper, nachdem die Außenhülse mit dem Ende des anderen Wellenabschnitts verbunden ist. Weiterhin vorteilhaft ist die Außenhülse in der Art elastisch verformbar , dass während des Einpressens des Wellenabschnittes in den Elastomerkörper die auftretenden Montagekräfte um mindestens den Faktor 2 geringer sind, als die resultierenden Auspresskräfte zwischen Wellenabschnitt und Elastomerkörper, nachdem die Außenhülse in eine Aufnahmeöffnung oder einen Aufnahmetopf montiert beziehungsweise eingesetzt oder eingepresst ist.. Nach dem Einsetzen des elastischen Lagers in eine Aufnahmeöffnung oder einen Aufnahmetopf des Wellenabschnitts ist ein radiales Maß der Außenhülse reduziert, so dass der Elastomerkörper auf den Wellenabschnitt aufgepresst, insbesondere aufkalibriert ist. Vorteilhaft ist ein radiales Maß der Außenhülse nach dem Einsetzen des elastischen Lagers in eine Aufnahmeöffnung oder einen Aufnahmetopf derart reduziert, dass die Auspresskräfte zwischen Wellenabschnitt und Elastomerkörper um mindestens den Faktor 2 höher sind als die Montagekräfte zum Einsetzen, insbesondere Einpressen des Wellenabschnittes in die Aufnahmeöffnung des Elastomerkörpers. Vorteilhaft wird die elastische Verformbarkeit durch eine gefaltete Geometrie der Außenhülse erzielt. Vorteilhaft weist die Außenhülse eine wellenförmige oder sternförmige Geometrie auf. Da das Lager kein starres Innenteil aufweist, wird der Elastomerkörper durch die Umfangsreduktion nicht in einem zu hohen Maße mittels Druckspannung beaufschlagt. Durch die Ausnutzung der großen Designfreiheit bei der Geometrie des Elastomerkörpers, infolge der innen ungehafteten Oberflächen, kann die Elastomergestalt so abgestimmt werden, dass bei gegebener Umfangsreduktion die Kalibrierung des Elastomerkörpers zwischen der Außenhülse und dem Wellenabschnitt zu einer optimalen Lebensdauer führt.

Da der radiale Umfang des elastischen Lagers reduzierbar ist, kann eine Positionierung mittels Formschluss sowie eine prozesssichere Montierbarkeit des Elastomerkörpers auf dem Ende eines Wellenabschnittes erreicht werden. Zudem können Hinterschnitte, beispielsweise Rippen und/oder korrespondierende Nuten, zwischen dem Ende des Wellenabschnittes als Formschluss zur Positionierung und Sicherung realisiert werden, da das Lager im Zustand seines größten Außenumfangs über diese Hinterschnitte geführt werden kann. Nach der Umfangsreduktion greifen dann die Rippen sicher in die dazu korrespondierenden Nuten ein.

In einer vorteilhaften Ausgestaltung weist der Elastomerkörper wenigstens einen Greifbackenabschnitt auf, der ausgebildet ist, einen sich in axialer Richtung erstreckenden, radial vorstehenden Zahn des Wellenabschnitts formschlüssig und kraftschlüssig aufzunehmen, insbesondere zu ergreifen. Vorteilhaft ist der Greifbackenabschnitt derart ausgebildet, dass dieser während einer Umfangsreduktion des elastischen Lagers verschwenken und an einem Zahn, insbesondere an Zahnflanken des Zahns, des Wellenabschnitts anliegen, insbesondere formschlüssig und kraftschlüssig an dem Zahn, insbesondere dessen Zahnflanken, des Wellenabschnitts anliegt. In einer vorteilhaften Ausgestaltung weist das elastische Lager zwei sich gegenüberliegende Greifbackenabschnitte auf. Vorteilhaft weist der Elastomerkörper zwei Greifbackenabschnitte auf, die sich vorteilhaft gegenüberliegen.

In einer vorteilhaften Ausgestaltung ist ein Greifbackabschnitt aus zwei sich gegenüberliegenden Elastomervorsprüngen, insbesondere konvexen Elastomervorsprüngen, gebildet. Vorteilhaft liegen sich die beiden Elastomervorsprünge gegenüber.

In einer vorteilhaften Ausgestaltung weist der Elastomerkörper wenigstens einen Aufnahmeabschnitt auf, der ausgebildet ist, einen sich in axialer Richtung erstreckenden, radial vorstehenden Zahn des Wellenabschnitts formschlüssig und/oder kraftschlüssig aufzunehmen. Insbesondere nimmt der wenigstens eine Aufnahmeabschnitt einen Abschnitt eines Endes eines Wellenabschnitt formschlüssig und/oder kraftschlüssig auf, nachdem der Elastomerkörper auf ein Ende eines Wellenabschnittes aufkalibriert ist. Vorteilhaft ist der Aufnahmeabschnitt als eine in dem Elastomerkörper eingebrachte Vertiefung ausgebildet, die vorteilhaft eine zu einem Zahn des Wellenabschnitts korrespondierende Kontur aufweist. In einer vorteilhaften Ausgestaltung weist der Elastomerkörper eine Vielzahl an Aufnahmeabschnitten auf, die eine formschlüssige und/oder kraftschlüssige Aufnahme eines Zahns des Wellenabschnitts ermöglichen. In einer vorteilhaften Ausgestaltung ist der Aufnahmeabschnitt aus einem waagerechten Abschnitt, einem konkaven Abschnitt und einem geneigten Abschnitt gebildet. Vorteilhaft liegt der geneigte Abschnitt nach dem Aufkalibrieren des Elastomerkörpers auf einem Ende eines Wellenabschnitts an einer Zahnflanke eines Zahnes an. Der waagerechte Abschnitt ist vorteilhaft im aufkalibrierten Zustand von der Zahnflanke beabstandet. Vorteilhaft liegt die Spitze des Zahnes in dem konkaven Abschnitt form- und kraftschlüssig ein. Der Aufnahmeabschnitt kann auch als Einliege- oder Eingriffabschnitt bezeichnet werden.

In einer vorteilhaften Ausgestaltung weist der Elastomerkörper wenigstens zwei Kompressionsspalte auf. Die Kompressionsspalte ermöglichen ein formschlüssiges und kraftschlüssiges Umgreifen eines Endes eines Wellenabschnittes, wenn der Außenumfang der Außenhülse reduziert wird. Vorteilhaft sind die Kompressionsspalte als in den Elastomerkörper eingebrachte Vertiefungen beziehungsweise Ausschnitte, insbesondere konisch ausgebildete Vertiefungen beziehungsweise konisch ausgebildete Ausschnitte ausgebildet. Vorteilhaft liegen sich die beiden Kompressionsspalte in Axialrichtung gesehen gegenüber. Weiterhin vorteilhaft ist jeweils ein Kompressionsabschnitt zwischen zwei Aufnahmeabschnitten angeordnet.

In einer vorteilhaften Ausgestaltung weist der Elastomerkörper wenigstens eine Symmetrieachse und/oder eine Punktsymmetrie und damit wenigstens zwei spiegel- oder punktsymmetrische Elastomerelemente auf. In einer vorteilhaften Ausgestaltung weist jedes Elastomerelement zwei Aufnahmeabschnitte, einen Kompressionsabschnitt, der zwischen den beiden Aufnahmeabschnitten angeordnet ist, und zwei sich gegenüberliegende Elastomerblöcke der beiden sich gegenüberliegenden Greifbackenabschnitte auf.

In einer vorteilhaften Ausgestaltung weist der Elastomerkörper wenigstens eine Positionierrippe und/oder wenigstens eine Positioniernut auf. Die Positionierrippe und/oder Positioniernut ermöglicht einen Formschluss zur Positionssicherung des Elastomerkörpers auf dem Wellenabschnitt. Vorteilhaft greift die Positionierrippe im aufkalibrierten Zustand in eine korrespondierende Nut am Wellenabschnitt ein beziehungsweise liegt die Positioniernut in eine korrespondierende Rippe des Wellenabschnitts ein. Im Zustand des größten Außenumfangs kann das Lager über diese Hinterschnitte geführt werden kann, wobei nach der Umfangsreduktion die Positionierrippen und/oder Positioniernuten sicher in dazu korrespondierende Nuten oder Rippen greifen. In einer vorteilhaften Ausgestaltung weist jeder der Elastomervorsprünge eines Greifbackenabschnitts eine Positionierrippe und/oder eine Positioniernut auf, die in korrespondierende Nuten oder Rippen der Zahnflanke eingreifen können.

In einer vorteilhaften Ausgestaltung weist die Außenhülse einen Positionierkragen auf. Der Positionierkragen erleichtert die Positionierung wenn das elastische Lager in eine Aufnahmeöffnung eines Endes eines Wellenabschnitts eingesetzt, insbesondere eingepresst wird. In einer vorteilhaften Ausgestaltung sind in den Positionierkragen Ausnehmungen eingebracht, die eine Umfangsreduktion des Positionierkragens ermöglichen. Insbesondere erstrecken sich die Ausnehmungen von einem Außenrand des Positionierkragens radial einwärts.

Erfindungsgemäß sind die Außenhülse und der Elastomerkörper im Zwei-Komponenten-Spritzguss-Verfahren hergestellt. Wenn das elastische Lager im Zwei-Komponenten-Spritzgussverfahren hergestellt ist, dann ist die Außenhülse aus Kunststoff, und ein thermoplastisches Elastomer wird unmittelbar an eine Innenmantelfläche der Außenhülse angespritzt.

In einer vorteilhaften Ausgestaltung sind die Wellenabschnitte Abschnitte einer Lenkspindel. Vorteilhaft sind die Wellenabschnitte als in axialer Richtung erstreckende, radial vorstehende Zähne ausgebildet.

Nachfolgend werden das elastische Lager sowie weitere Merkmale und Vorteile anhand von Ausführungsbeispielen näher erläutert, die in den Figuren schematisch dargestellt sind. Hierbei zeigen:
- Fig. 1: eine perspektivische Darstellung eines elastischen Lagers gemäß einer ersten Ausführungsform;
- Fig. 2: eine perspektivische Darstellung eines elastischen Lagers gemäß einer zweiten Ausführungsform; und
- Fig. 3: einen Längsschnitt durch das in Fig. 2 dargestellte elastische Lager im montierten Zustand auf einem sternförmigen Lenkspindelzapfen.

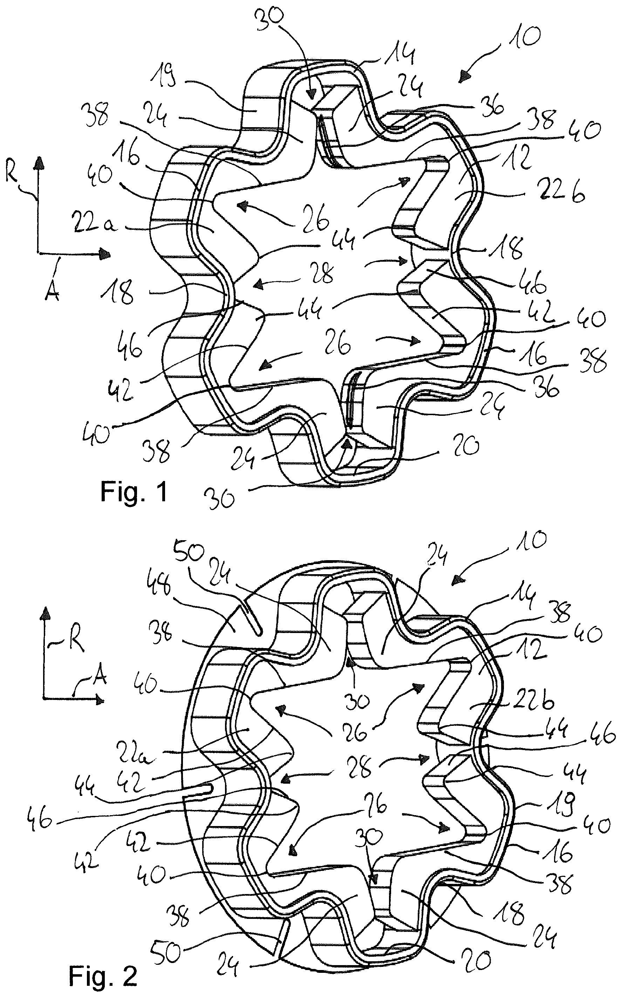

In Fig. 1 ist ein elastisches Lager 10 offenbart, das Wellenenden einer nicht dargestellten Lenksäule drehmomentelastisch miteinander verbindet.

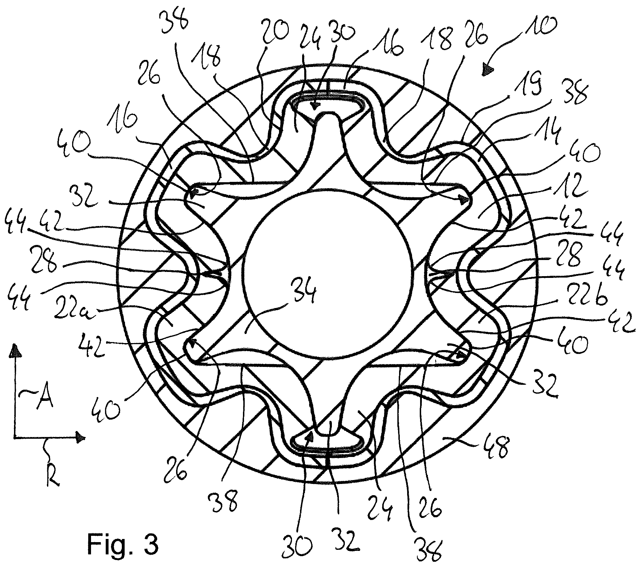

Das elastische Lager 10 weist einen Elastomerkörper 12, der mit einem Ende eines in Fig. 3 dargestellten Wellenabschnitts 34 einer nicht dargestellten Lenksäule verbindbar ist und eine den Elastomerkörper 12 umgebende Außenhülse 14 auf, die mit einem Ende eines anderen nicht dargestellten Wellenabschnitts einer Lenksäule verbindbar ist. Vorzugsweise wird die Außenhülse in eine in dem Wellenabschnitt ausgebildete Aufnahmeöffnung oder einen Aufnahmetopf eingesetzt, insbesondere eingepresst.

Die Außenhülse 14 ist aus Metall oder Kunststoff, insbesondere faserverstärktem Kunststoff. Die Außenhülse 14 weist eine wellenförmige oder sternförmige Kontur auf, die aus konkaven Vorsprüngen 16 und konvexen Vertiefungen 18 gebildet ist. Die konkaven Vorsprünge 16 können auch als Wellenberge, und die konvexen Vertiefungen 18 können auch als Wellentäler bezeichnet werden. Durch die wellenförmige Kontur ist Außenhülse 14 elastisch verformbar, insbesondere ist ein Außenumfang 19 der Außenhülse 14 reduzierbar. Dadurch kann die die Außenhülse 14 in eine Radialrichtung R komprimiert werden.

Der Elastomerkörper 12 ist an eine Innenmantelfläche 20 der Außenhülse 14 angebunden, insbesondere anvulkanisiert. Wie in Fig. 1 ersichtlich ist, ist der Elastomerkörper 12 aus zwei spiegelsymmetrischen Elastomerelementen 22a, 22b gebildet, wobei jedes der Elastomerelemente 22a, 22b zwei Elastomervorsprünge 24, zwei Aufnahmeabschnitte 26 und einen zwischen den beiden Aufnahmeabschnitte 26 ausgebildeten Kompressionsspalt 28 aufweist.

Wie durch eine Zusammenschau der Figuren 1 und 3 ersichtlich ist, liegen sich jeweils zwei Elastomervorsprünge 24 in eine Axialrichtung A gesehen gegenüber und bilden einen Greifbackenabschnitt 30, der ausgebildet ist, einen Zahn 32 eines Wellenabschnitts 34 formschlüssig und kraftschlüssig zwischen sich aufzunehmen. Wie ferner in Fig. 1 ersichtlich ist, weist jeder der Elastomervorsprünge 24 eine abragende Positionierrippe 36 auf, die in eine korrespondierende Nut eines Zahnes 32 eingreifen kann.

Jeder der Aufnahmeabschnitte 26 nimmt einen Zahn 32 des Wellenabschnitts 34 formschlüssig und/oder kraftschlüssig auf, wie in Fig. 3 ersichtlich ist. Hierzu weist jeder der Aufnahmeabschnitte 26 einen waagerechten Abschnitt 38, einen sich an den waagerechten Abschnitt 38 anschließenden konkaven Abschnitt 40 und einen sich an den konkaven Abschnitt 40 anschließenden geneigten Abschnitt 42 auf.

Der Kompressionsspalt 26 ist in Form einer konischen Ausnehmung 46 ausgebildet, wobei sich die konische Ausnehmung 46 von einem konvexen Abschnitt 44 des Elastomerkörpers 12 in Radialrichtung R nach außen erstreckt.

Zur Montage des elastischen Lagers 10 wird der Elastomerkörper 12 auf den in Fig. 3 dargestellten Wellenabschnitt 34 aufkalibriert, so dass der Elastomerkörper 12 den Wellenabschnitt 34 formschlüssig und kraftschlüssig umgreift. Hierzu wird zunächst der Elastomerkörper 12 auf den Wellenabschnitt 34 aufgeschoben, so dass zwei sich gegenüberliegende Zähne 32 zwischen den Elastomervorsprüngen 24 der Greifbackenabschnitte 30 angeordnet sind und die anderen Zähne 32 innerhalb der Aufnahmeabschnitte 26 angeordnet sind. Anschließend wird das elastische Lager 10, insbesondere die Außenhülse 14, in eine nicht dargestellte Aufnahmeöffnung oder einen nicht dargestellten metallischen Außentopf eingesetzt beziehungsweise eingepresst. Der Innendurchmesser der Aufnahmeöffnung beziehungsweise der Innendurchmesser dieses Außentopfes ist so klein gewählt, dass der Außenumfang 19 der Außenhülse 14 reduziert wird. Dadurch wird der Elastomerkörper 12 komprimiert. Durch die Kompression des Elastomerkörpers 12 werden die Kompressionsspalte 28 nahezu geschlossen, so dass die Elastomervorsprünge 24 der Greifbackenabschnitte 30 form- und kraftschlüssig an den Zähnen 32 des Wellenabschnitts 34 anliegen, wie in Fig. 3 ersichtlich ist. Wie zudem in Fig. 3 ersichtlich ist, liegen die geneigten Abschnitt 42 aufgrund der Kompression des Elastomerkörpers 12 an den Zahnflanken der Zähne 32 an, die Spitzen der Zähne 32 liegen form- und kraftschlüssig in den konkaven Abschnitten 40 ein und die waagerechten Abschnitte 38 sind von den Zahnflanken der Zähne 32 beabstandet. Durch die Reduktion des radialen Umfangs der Außenhülse können der Formschluss zwischen dem Elastomerkörper 12 und dem Wellenabschnitt 34 sowie die Anpresskraft für einen optimalen Reibschluss gezielt eingestellt werden. Während der Umfangsreduktion beziehungsweise des Formschlusses greifen die auf den Elastomervorsprüngen 24 abragenden Positionierrippen 36 in korrespondierende Ausnehmungen der Zähne 32 und sorgen so für eine ausreichende Sicherung und eine lagegenaue axiale Positionierung von elastischem Lager 10 und Wellenabschnitt 34.

Nachfolgend wird eine weitere Ausführungsform des elastischen Lagers 10 beschrieben, wobei für deren Beschreibung die zuvor bereits verwendeten Bezugszeichen für gleiche oder funktionsgleiche Teile verwendet werden.

In den Figuren 2 und 3 ist eine zweite Ausführungsform des elastischen Lagers gezeigt, die sich von der ersten Ausführungsform dadurch unterscheidet, dass die Außenhülse 14 einen umlaufenden Positionierkragen 48 aufweist. Der Positionierkragen 48 erleichtert die Positionierung beim Einsetzen des elastischen Lagers 10 in eine nicht dargestellte Aufnahmeöffnung beziehungsweise einen nicht dargestellten äußeren Aufnahmetopf des Wellenabschnitts 34.

Wie in Fig. 2 ersichtlich ist, weist der Positionierkragen 48 radial einwärts gerichtete Ausnehmungen 50 auf, die eine Reduktion des radialen Umfangs des Positionierkragens 48 ermöglichen. Wie zudem in Fig. 2 ersichtlich ist, weist der Elastomerkörper 12 im Vergleich zu der ersten Ausführungsform des elastischen Lagers 10 keine Positionierrippen 36 auf.

Das elastische Lager 10 zeichnet sich dadurch aus, dass es lediglich eine Außenhülse 14 und einen mit der Außenhülse 14 verbundenen Elastomerkörper 12 aufweist. Die Verbindung des elastischen Lagers 10 mit dem Wellenabschnitt 34 erfolgt durch Form- und Kraftschluss, indem der Außenumfang 19 der Außenhülse reduziert und damit der Elastomerkörper 12 komprimiert wird. Dadurch ist das elastische Lager 10 einfach zu montieren. Zudem entfällt ein Innenteil oder eine Innenhülse, so dass das Lager 10 kostengünstig ist. Darüber hinaus ist bei gegebenen inneren und äußeren Anschlussgeometrien mehr Bauraum für das Elastomer vorhanden. Dies führt zu geringeren Dehnungen im Elastomerkörper 12 bei gegebenen Torsionsauslenkungen und damit zu einer hohen Lebensdauer. Durch die direkt im Spritzgusswerkzeug anliegende innere Mantelfläche des Elastomerkörpers 12 weist das Lager 10 eine große Designfreiheit auf, so dass seine Eigenschaften in weiten Bereichen eingestellt werden können. Ferner, da die Innenkontur des Elastomerkörpers 12 frei zugänglich ist, sind zur Ausbildung von Nieren beziehungsweise Freiräumen keine filigranen Stifte oder Schwerter im Werkzeug notwendig. Vielmehr besteht die Innenkontur des Werkzeugs aus einer verhältnismäßig kompakten Struktur und ist damit robust und im Prozess beziehungsweise bei Werkzeugreinigung unempfindlich gegenüber Beschädigung und Verbiegungen.

### Bezugszeichenliste

- 10: elastisches Lager
- 12: Elastomerkörper
- 14: Außenhülse
- 16: konkaver Vorsprung
- 18: konvexe Vertiefung
- 19: Außenumfang
- 20: Innenmantelfläche
- 22a: Elastomerelement
- 22b: Elastomerelement
- 24: Elastomervorsprung
- 26: Aufnahmeabschnitt
- 28: Kompressionsspalt
- 30: Greifbackenabschnitt
- 32: Zahn
- 34: Wellenabschnitt
- 36: Positionierrippe
- 38: waagerechter Abschnitt
- 40: konkaver Abschnitt
- 42: geneigter Abschnitt
- 44: konvexer Abschnitt
- 46: konische Ausnehmung
- 48: Positionierkragen
- 50: Ausnehmung

- R: Radialrichtung
- A: Axialrichtung

## Patentansprüche

1. Elastisches Lager (10) zum drehelastischen Verbinden zweier Wellenabschnitte, aufweisend einen Elastomerkörper (12), der mit einem Ende eines der Wellenabschnitte (34) formschlüssig und kraftschlüssig verbindbar ist, und eine den Elastomerkörper (12) umgebende Außenhülse (14), die mit einem Ende des anderen Wellenabschnitts verbindbar ist, **dadurch gekennzeichnet, dass** die Außenhülse (14) und der Elastomerkörper (12) im Zwei-Komponenten-Spritzguss-Verfahren hergestellt sind, wobei die Außenhülse aus Kunststoff hergestellt ist, und wobei der Elastomerkörper (12) aus einem thermoplastischen Elastomer unmittelbar an einer Innenmantelfläche (20) der Außenhülse (14) angespritzt ist.

2. Elastisches Lager (10) nach Anspruch 1, **dadurch gekennzeichnet, dass** der Elastomerkörper (12) wenigstens einen Greifbackenabschnitt (30) aufweist, der ausgebildet ist, einen sich in axialer Richtung erstreckenden, radial vorstehenden Zahn (32) des Wellenabschnitts (34) formschlüssig und kraftschlüssig aufzunehmen.

3. Elastisches Lager (10) nach Anspruch 2, **dadurch gekennzeichnet, dass** der Greifbackenabschnitt (30) aus zwei sich gegenüberliegenden Elastomervorsprüngen (24) gebildet ist.

4. Elastisches Lager (10) nach einem der vorhergehenden Ansprüche, **dadurch gekennzeichnet, dass** der Elastomerkörper (12) wenigstens einen Aufnahmeabschnitt (26) aufweist, der ausgebildet ist, einen sich in axialer Richtung erstreckenden, radial vorstehenden Zahn (32)des Wellenabschnitts (34) formschlüssig und/oder kraftschlüssig aufzunehmen.

5. Elastisches Lager (10) nach einem der vorhergehenden Ansprüche, **dadurch gekennzeichnet, dass** der Elastomerkörper (12) wenigstens zwei Kompressionsspalte (28) aufweist.

6. Elastisches Lager (10) nach einem der vorhergehenden Ansprüche, **dadurch gekennzeichnet, dass** der Elastomerkörper (12) wenigstens eine Symmetrieachse und/oder eine Punktsymmetrie und damit wenigstens zwei Spiegel- oder punktsymmetrische Elastomerelemente (22a, 22b) aufweist.

7. Elastisches Lager (10) nach einem der vorhergehenden Ansprüche, **dadurch gekennzeichnet, dass** der Elastomerkörper (12) wenigstens eine Positionierrippe (36) und/oder wenigstens eine Positioniernut aufweist.

8. Elastisches Lager (10) nach einem der vorhergehenden Ansprüche, **dadurch gekennzeichnet, dass** die Außenhülse (14) einen Positionierkragen (48) aufweist.

9. Elastisches Lager nach einem der vorhergehenden Ansprüche, **dadurch gekennzeichnet, dass** die Wellenabschnitte (34) Abschnitte einer Lenkspindel sind.

## Claims

1. Elastic bearing (10) for connecting two shaft sections in a rotationally elastic manner, comprising an elastomer body (12) which can be connected in a form-fitting and force-fitting manner to one end of one of the shaft sections (34), and an outer sleeve (14) surrounding the elastomer body (12), which can be connected to one end of the other shaft section, **characterised in that** the outer sleeve (14) and the elastomer body (12) are manufactured using a two-component injection moulding process, wherein the outer sleeve is made of plastic, and wherein the elastomer body (12) is injection moulded from a thermoplastic elastomer directly onto an inner jacket surface (20) of the outer sleeve (14).

2. Elastic bearing (10) according to claim 1, **characterised in that** the elastomer body (12) has at least one gripping jaw section (30) which is designed to receive an axially extending, radially protruding tooth (32) of the shaft section (34) in a form-fitting and force-fitting manner.

3. Elastic bearing (10) according to claim 2, **characterised in that** the gripping jaw section (30) is formed from two opposing elastomer projections (24).

4. Elastic bearing (10) according to one of the preceding claims, **characterised in that** the elastomer body (12) has at least one receiving section (26) which is designed to receive an axially extending, radially protruding tooth (32) of the shaft section (34) in a form-fitting and/or force-fitting manner.

5. Elastic bearing (10) according to one of the preceding claims, **characterised in that** the elastomer body (12) has at least two compression gaps (28).

6. Elastic bearing (10) according to one of the preceding claims, **characterised in that** the elastomer body (12) has at least one axis of symmetry and/or point symmetry and thus at least two mirror-symmetrical or point-symmetrical elastomer elements (22a, 22b).

7. Elastic bearing (10) according to one of the preceding claims, **characterised in that** the elastomer body (12) has at least one positioning rib (36) and/or at least one positioning groove.

8. Elastic bearing (10) according to one of the preceding claims, **characterised in that** the outer sleeve (14) has a positioning collar (48).

9. Elastic bearing according to one of the preceding claims, **characterised in that** the shaft sections (34) are sections of a steering spindle.

## Revendications

1. Support élastique (10) pour relier de manière élastique en rotation deux sections d'arbre, comprenant un corps en élastomère (12) qui peut être relié par complémentarité de forme et par adhérence à une extrémité de l'une des sections d'arbre (34), et une douille extérieure (14) entourant le corps en élastomère (12), qui peut être reliée à une extrémité de l'autre section d'arbre, **caractérisé en ce que** la douille extérieure (14) et le corps en élastomère (12) sont fabriqués selon un procédé de moulage par injection à deux composants, la douille extérieure étant fabriquée en matière plastique, et le corps en élastomère (12) étant moulé par injection à partir d'un élastomère thermoplastique directement sur une surface d'enveloppe intérieure (20) de la douille extérieure (14).

2. Support élastique (10) selon la revendication 1, **caractérisé en ce que** le corps en élastomère (12) comporte au moins une partie de mâchoire de préhension (30) qui est conçue pour recevoir par complémentarité de forme et par adhérence une dent (32) de la section d'arbre (34) s'étendant dans la direction axiale et faisant saillie radialement.

3. Support élastique (10) selon la revendication 2, **caractérisé en ce que** la partie de mâchoire de préhension (30) est formée de deux saillies élastomères (24) opposées.

4. Support élastique (10) selon l'une des revendications précédentes, **caractérisé en ce que** le corps en élastomère (12) comporte au moins une partie de réception (26) qui est conçue pour recevoir par complémentarité de forme et/ou par adhérence une dent (32) de la section d'arbre (34) s'étendant dans la direction axiale et faisant saillie radialement.

5. Support élastique (10) selon l'une des revendications précédentes, **caractérisé en ce que** le corps en élastomère (12) présente au moins deux fentes de compression (28).

6. Support élastique (10) selon l'une des revendications précédentes, **caractérisé en ce que** le corps en élastomère (12) présente au moins un axe de symétrie et/ou une symétrie ponctuelle et donc au moins deux éléments en élastomère (22a, 22b) symétriques par réflexion ou ponctuels.

7. Support élastique (10) selon l'une des revendications précédentes, **caractérisé en ce que** le corps en élastomère (12) comporte au moins une nervure de positionnement (36) et/ou au moins une rainure de positionnement.

8. Support élastique (10) selon l'une des revendications précédentes, **caractérisé en ce que** la douille extérieure (14) comporte une collerette de positionnement (48).

9. Support élastique selon l'une des revendications précédentes, **caractérisé en ce que** les sections d'arbre (34) sont des sections d'une broche de direction.
